# EUROPEAN PATENT SPECIFICATION

(11) **EP 3 479 701 B1**
(45) Date of publication and mention of the grant of the patent: **01.07.2020**
(21) Application number: 18204248.1
(22) Date of filing: 05.11.2018
(51) Int. Cl.: A23K 10/18, A01K 15/02, A23K 20/163, A23K 50/42

(54) **METHOD OF PREPARATION OF A PET CHEW TOY WITH ORAL CARE PROPERTIES**
HERSTELLUNGSVERFAHREN FÜR KAUSPIELZEUG FÜR HAUSTIERE MIT ORALEN PFLEGEEIGENSCHAFTEN
PROCEDE DE PREPARATION D'UN JOUET A MACHER POUR ANIMAUX DE COMPAGNIE POUR HYGIENE BUCCALE

(30) Priority: 03.11.2017 TW 107104697; 01.02.2018 CN 201810100061
(43) Date of publication of application: 08.05.2019
(73) Proprietor: Kyorin Industry (Shenzhen) Co., Ltd, 518115 Shen Zhen (CN)
(72) Inventor: WONG, Tommy Chi-Kin, 518115 Shen Zhen (CN); CLEVERS, Christopher Kenneth, 518115 Shen Zhen (CN); CHIEN, Tin-Han, 518115 Shen Zhen (CN)
(74) Representative: Lavoix

(56) References cited:
- US-A- 6 165 474
- US-A1- 2005 147 651
- US-A1- 2005 153 018
- US-A1- 2005 214 420
- US-A1- 2006 110 500
- US-A1- 2011 300 197
- US-A1- 2016 158 147

## Description

### FIELD OF THE INVENTION

The present invention relates to the field of pet chew toys, and more particularly to a method for preparing a pet chew toy with oral care properties.

### BACKGROUND OF THE INVENTION

With an improvement in financial means in many parts of the world, pets have become an important part of people's life. Today, pet keeping consumers have a tendency to take better care of their pets than themselves and the direct link between good dental hygiene and long term pet health is becoming more and more evident. Food debris tends to adhere to pets' teeth, especially dogs and cats, causing tartar accumulation and dental calculus which provide a breeding ground for bacteria. It can ultimately lead to periodontal disease, tooth fracture, mandible fracture and stomatitis. It is generally recognized that periodontitis is a direct result of bacteria accumulation such as *Porphyromonas gingivalis, Tannerella forsythia,* and *Fusobacterium nucleatum.* Related oral disease occurs when the microbial balance in a pet's mouth is upset. Furthermore, numerous oral diseases can further aggravate any imbalance of microbial flora, entering into a vicious, unstoppable cycle. For example, reports have indicated that the incidence of periodontal disease of 2 to 8-year-old pet dogs is about 60% to 80% and shows positive correlation with age. The main treatment methods for pet oral diseases include oral cleaning, tartar and calculus removal by ultrasonic waves, hand held tools or prescribing of broad-spectrum anti-inflammatory antibiotics. However, it is time-consuming, labor-intensive and expensive to conduct oral cleaning of pets' teeth; use of antibiotics can achieve a certain curative efficacy in the short term, yet antibiotics break the balance of the original and desirable microbial flora in the pets' mouth and digestive tract and exacerbate oral problems over the longer term. Moreover, due to the pet's licking tendencies, especially dogs, pets with oral disease(s) can easily spread germs to human skin surfaces (mouth, face, arms, etc.) and jeopardize a pet owner's health, especially infants, young children and the elderly whose immune systems are relatively weak. There have also been cases where pet owners exhibit adverse reaction(s) after being licked by their oral diseased pet. To date, there has been no identifiable nor feasible solution for the aforementioned problem.

Pet chews are a well-known pet toy made in a configuration resembling a bone, ball, ring, shoe, stick, chew, and so on. Dog chew toys are the most common on the market today. Since dogs have a habit of biting then gnawing, dog chews are generally available in shapes suitable for the dog to play with. More importantly, some dog chews are specifically purported to clean the teeth and massage the gums. A combination of utilizing a dog chew toy frequently and brushing the teeth by hand regularly can slow down the formation of dental plaque and tartar accumulation. However, the effects of brushing the teeth regularly is typically unsatisfactory as it is not an easy task to meticulously brush the dogs' teeth without any omission and most consumers do not commit to a daily brushing regiment. Therefore, utilizing a dog chew can help to achieve some desirable effect in mitigating gingivitis and preventing tartar buildup while strengthening and cleansing the teeth during the chewing process. In addition, younger dogs usually suffer from itchy gums during teething. Providing dogs with dog chew toys not only satisfies the canine chewing urge and eases the discomfort of teething, but also cleans the mouth and promotes oral health and jaw development.

Conventional pet chew toys are made from various materials. For example, many chew products are made from animal-derived materials such as cow skins or pig skins. There are also rubber-molded, stick-shaped or ball-shaped chews made from starch, animal protein powder and food fiber. Over the years, a wide variety of pet chew toys have been brought to market in an attempt to achieve better oral care performance. Some focused on the structure and the mechanical cleansing ability of the chew toy. For example, U.S. Pat. Nos. 5,296,209 and 5,407,661, both to Simone et al., describe a pet chew product with a flexible cellular matrix made of cellulose fibrous material, which have a mechanical cleansing function intended to reduce plaque and tartar on the pets' teeth. U.S. Pat. No. 5,431,927 to Hand et al. describes a pet food containing mixtures of carbohydrates, protein, fat and vitamins, which has an expanded striated structure matrix which ruptures when chewed by a pet, creating a mechanical tooth cleansing function. U.S. Pat. No. 6,904,870 to Russell-Maynard et al. describes a polymer composition having a continuous phase and a discontinuous phase in such a proportion so that an anticipated bite force exerted by the pet is greater and thus improve dental hygiene. However, conventional pet chew toys focus only on the physical property of chewing friction to rub and clean the pets' teeth. Although these examples can remove food debris and reduce the formation of dental calculus and plaque to a degree, they typically cannot eliminate the incidence of tartar accumulation and dental calculus.

Further, chemical anti-plaque or anti-tartar ingredients are also used in various applications with some applying antimicrobial agents and anti-decay agents to pet food or pet chew toys. For example, U.S. Pat. No. 5,094,870 to Scaglione et al. discloses a dog biscuits containing at least one inorganic pyrophosphate salt which reduced or prevented tartar accumulations on the pets' teeth. U.S. Pat. Nos. 5,011,679, 5,047,231, and 5,114,704, all to Spanier et al., describe a process of preparing rawhide chew products having a coating containing at least one inorganic pyrophosphate compound intended to reduce or prevent tartar accumulation when being chewed and/or eaten by pets. U.S. Pat. No. 5,100,651 to Boyer discloses a health product for the care of teeth of dogs which contains fluoride, bromochlorophene, and sodium benzoate. U.S. Pat. No. 5,296,217 to Stookey discloses a method for preventing dental calculus using sequestering agents, which form soluble calcium complexes in saliva and dental plaque fluids thereby preventing the calcification of dental plaque. U.S. Pat. No. 5,310,541 to Montgomery describes an antimicrobial animal chew product containing one or more enzymes and substrates for the purpose of generating antimicrobial compounds for tartar prevention, such as hypothiocyanite, thiocyanate and iodideions. U.S. Pat. No. 5,467,741 to O'Rourke discloses a dog chew toy in which the twisted fibers are impregnated with one or more breath freshening or flavoring agents. U.S. Pat. No. 5,618,518 to Stookey discloses a chew product useful against the build-up of dental calculus containing sodium hexametaphosphate. U.S. Pat. No. 5,908,614 to Montgomery describes a peroxidase-activating oral care composition containing a non-enzymatic, water-soluble hydrogen peroxide precursor and a pH-adjusting agent. U.S. Pat. No. 5,989,604 to Wolf et al. discloses a pet foodstuff containing an effective amount of xylitol for reducing the incidence of dental caries in non-human animals. U.S. Pat. No. 6,365,133 to Rich describes a dog chew coated with a dried anti-tartar toothpaste on its outer surface. The pet toothpaste formula comprises dicalcium phosphate, pumice, and one or more thickening and binding agents intended to effectively reduce tartar on the pets' teeth. Though some inventions are a combination of both mechanical and chemical oral care benefits, they do not address oral microbial flora imbalance and/or germ breeding from the root cause and thus fail to achieve a more desirable affect for a pet's oral health.

Probiotics are live microbes, which can improve and maintain the microbial balance of the host when administered to animals. There are pet food products with added probiotics such as Bacillus or Lactobacillus. However, these pet food products were primarily developed to support a pets' intestinal health, and offer little or no benefit relative to preventing oral disease(s) or the proliferation and transfer of germs to the pet's family members. Moreover, food only stays within the mouth area for a very short period of time before it is swallowed, which all but eliminates the possibility that the probiotics in the food could be activated, reproduce or colonize, and consequently these probiotic enhanced products fail to develop a sufficient quantity to form predominant probiotic flora in the mouth.

Pet chew toys comprising fermented soy in a molded matrix are disclosed in US 2006/0110500.

### SUMMARY OF THE INVENTION

Briefly, the present invention is intended to overcome the aforementioned drawbacks of the prior products by providing a method, which is defined by the claims, of preparing of a pet chew toy with actual and verifiable oral care properties. The invention belongs to the category of pet toys rather than pet food.

The invention provides a method for preparing a pet chew toy with oral care properties that comprises a main body, adhesives, probiotics and prebiotics, wherein said method comprises the following steps:
measuring the ingredients of said pet chew toy;applying a part of adhesive to the surface of the main body, and then applying a premixes probiotics, prebiotics and adhesive to the surface of the main body to obtain said pet chew toy with oral health care properties;
wherein the adhesive applied to the surface of the main body is different from the adhesive premixed with the probiotics and prebiotics;
wherein said main body comprises at least one of woven fabrics, rubber, plastic, starch, proteins, fibers, and bone powder and/or a commercially available pet toy;
wherein said adhesives are the plant-based adhesives and/or the animal-based adhesives defined below.

In order to solve the technical problems thereof, the present invention employs the technical solution as follows:
A pet chew toy with oral care properties, wherein the pet chew toy comprises a main body, adhesives, probiotics and prebiotics.

Preferably, the pet chew toy has a feature of flexibility and ductility which make them durable, and the probiotics, prebiotics, and adhesives contained in the chew are released by the ductility of the pet chew toys during the pet's chewing process. The main body is made from materials including at least one of woven fabrics, rubber, plastic, starch, fibers, bone powder, and proteins; the proteins include but are not limited to plant proteins and animal skins, and/or the main body comprises a commercially available pet toy. The adhesives are plant-based and/or animal-based adhesives; the plant-based adhesives comprise at least one of starch, cellulose, tannin, gum arabic and sodium alginate; the animal-based adhesives include but are not limited to bone glue, fish gelatin, blood-albumen glue, casein, and shellac.

Preferably, the probiotics are human intestinal probiotics group which are beneficial to the human body. the probiotics include Bifidobacterium and/or Lactobacillus and/or Bacillus probiotics.

Preferably, the bifidobacterium includes but not limited to *Bifidobacterium bifidum, Bifidobacterium animalis, Bifidobacterium breve, Bifidobacterium infantis, Bifidobacterium adolescentis,* and *Bifidobacterium longum.* At least one above-mentioned species is applied.

Preferably, the lactobacillus includes but not limited to *Lactobacillus acidophilus, Lactobacillus casei, Lactobacillus crispatus, Lactobacillus bulgaricus, Lactobacillus delbrueckii* subsp. *lactis, Lactobacillus fermentum, Lactobacillus gasseri, Lactobacillus helveticus, Lactobacillus johnsonii, Lactobacillus paracasei, Lactobacillus plantarum, Lactobacillus reuteri, Lactobacillus rhamnosus,* and *Lactobacillus salivarius.* At least one above-mentioned species is applied.

Preferably, the bacillus includes but not limited *Bacillus coagulans, Bacillus subtilis,* and *Bacillus licheniformis.* At least one above-mentioned species is applied.

Preferably, the probiotics are combinations comprising at least one or more strains from Bifidobacterium, Lactobacillus, and Bacillus mixing in any proportion.

Preferably, the culture mediums and culture methods of the probiotics are conventional ones in the related fields.

Preferably, the probiotics are incorporated with an appropriate amount of freeze-dried protectants. Live bacteria pellets are mixed with freeze-dried protectants and proceed with freeze drying to obtain the applied probiotics powder.

Preferably, the prebiotics include but not limited to functional oligosaccharides; the functional oligosaccharides include but not limited to isomaltooligosaccharides, fructooligosaccharides, galactooligosaccharides, xylooligosaccharides, lactosucrose, soybean oligosaccharides, and inulin.

Preferably, the pet chew toys are flexible and ductile. During the chewing process, the probiotics, prebiotics, and adhesives contained in the chew toys are dispersed and become activated. The intrinsic ductility of the pet chew toys and extended exposure to the surfaces in the mouth of the animal this ductility creates along with the inability of the pet to rapidly consume said chew toys creates a perfect opportunity for the dental oral care benefits to flourish.

The pet chew toys consist of three constituents: a main body made from starch, animal and/or plant protein powder and bone powder; plant-based and/or animal-based adhesives; a plurality of dental care components made from probiotics, prebiotics and adhesives. The dental care components are arranged on the surface of the main body.

Preferably, the pet chew is composed of 0.1%-3% (w/w) of probiotics powder, 1%-20% (w/w) of prebiotic, 15%-40% (w/w) of starch, 25%-45% (w/w) of animal/plant protein powder, 5%-15% (w/w) of bone powder, and 0.5%-10% (w/w) of adhesives. Preferably, the pet chew is composed of 0.1%-1% (w/w) of probiotics, 10%-20% (w/w) of prebiotic, 20%-35% (w/w) of starch, 30%-40% (w/w) of animal/plant protein powder, 5%-15% (w/w) of bone powder, and 0.5%-10% (w/w) of adhesives.

The method of preparing a pet chew toy with oral care properties may include that the above-mentioned pet chew ingredients are measured according to the proportion and mixed thoroughly for pressing or molding into designated shapes.

The method of preparing a pet chew toy with oral care properties may include that the above-mentioned pet chew ingredients are measured according to the proportion, and the ingredients except for the probiotics, the prebiotics and the adhesive, are mixed thoroughly for pressing or molding into designated shapes as the main body. A part of adhesive are applied to the surface of the main body, and the premixed prebiotics, prebiotics and adhesives are then applied to the surface of the main body.

The method of preparing a pet chew toy with oral care properties may include that the above-mentioned pet chew ingredients are measured according to the proportion and mixed thoroughly. A part of adhesive are applied to the surface of the main body (for example, commercially available pet toys), and the premixed prebiotics, prebiotics and adhesives are then applied to the surface of the main body.

All the pet chew toys made from the above-mentioned materials, unless otherwise specified, are produced with conventional techniques and methods in the related fields. According to the described manufacturing techniques of the invention, further expansion of the production scale is feasible if combined with the basic knowledge of the related fields.

The improved beneficial effects of the present invention are:
The present invention relates to a method that provides a pet chew toy with oral care properties and has a feature of flexibility and ductility which makes it durable during the chewing process. The pet chew toy not only satisfies the pet's need for teeth grinding and/or gnawing, but the ductility offers the benefit of extending inter-mouth exposure and interaction to a relatively long period of time. This extended contact time effectively releases the probiotics, prebiotics, and adhesives contained in the pet chew and allows them to adhere to mouth surfaces in sufficient levels to provide actual oral care benefits. Additionally, the extended tooth contact time helps clean the pet's teeth and the mixture of the probiotics, prebiotics, and adhesives that have adhered to the pet's mouth surfaces efficiently allow: (1) the prebiotics to promote the colonization of the probiotic (2) the probiotics to form predominant bacterial flora, (3) the probiotic to inhibit the growth of undesirable germs in the pet's mouth while promoting more ideal oral health (4) the probiotic to help eliminate fetid breath.

The main body, adhesives and prebiotics of the present invention play a role in embedding, allowing probiotics to be activated only when damped by moisture from the pet's mouth or saliva. Once the moisture is no longer present or evaporates and the chew toy of the present invention becomes dry, the probiotics go back into their original and dormant state until the next activation. Therefore, the present invention is reusable and offers the same benefit for multiple uses.

Preferably, the prebiotics are selected from isomaltooligosaccharides, fructooligosaccharides, galactooligosaccharides, xylooligosaccharides, lactosucrose, soybean oligosaccharides, and inulin. The prebiotics optimize the microbial balance by promoting the probiotics to reproduce and form predominant bacterial flora.

The prebiotics also bind with pathogenic bacteria cells, weakening the adhesion of pathogenic bacteria to mucous membranes, and thereof play a role in preventing infections.

The probiotics of the present invention are selected from human intestinal flora and therefore have less negative effect to humans. The probiotics are colonized in the pet's mouth during the chewing process of the pet chew and inhibit the germs detrimental to human health. The probiotics not only improve the pet's oral health but also reduce risks to pet owners from being licked by the pet (particularly dogs). Preferably, the probiotics are Bifidobacterium, Lactobacillus, and Bacillus, such as *Lactobacillus reuteri, Lactobacillus rhamnosus, Lactobacillus salivarius,* and *Bacillus coagulans.* The probiotics are implanted in the pet's mouth, inhibiting harmful microorganisms and maintaining oral health. Wherein, *Lactobacillus salivarius* is able to survive in the low pH environment caused by *Streptococcus mutan* and thus pertinently inhibit it. *Lactobacillus reuteri* secretes reuterin and reutericyclin, which have broad-spectrum antibacterial effects and play an important role in preventing tooth decay and maintaining oral health. *Bacillus coagulan* has been reported to be effective in maintaining oral health by inhibiting the growth of *Streptococcus mutans,* supporting the immune system to resist pathogens, and reducing inflammatory cytokines.

The present invention relates to methods of production of pet chew toys can be produced in various forms and shapes. It can provide a pet toy with a guarantee to improve a pet's health.

A small amount of protein powder and bone powder may be incorporated into the pet chew toys to improve the flavor. Without supplying nutrition and/or energy, the intended probiotics are capable of providing true oral care benefits during any chewing and/or grinding activity.

### BRIEF DESCRIPTION OF THE DRAWINGS

Fig. 1 is a structural view of a pet chew toy product of the present invention;
Fig. 2 is a structural view of a pet chew toy product of the present invention;
Fig. 3 is a structural view of a pet chew toy product of the present invention;
Fig. 4 is a structural view of a pet chew toy product of the present invention;

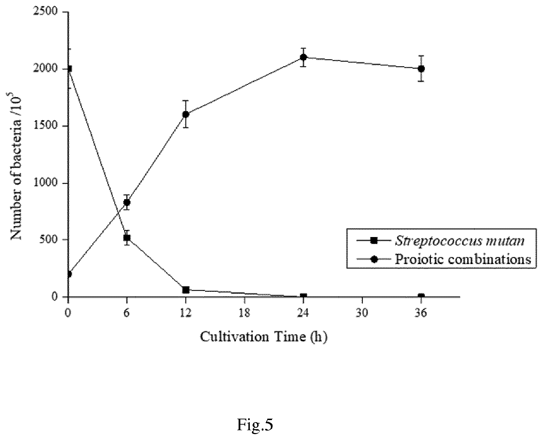

The probiotic combinations were co-cultivated with *Streptococcus mutan,* and the experiment result shown in Fig. 5;

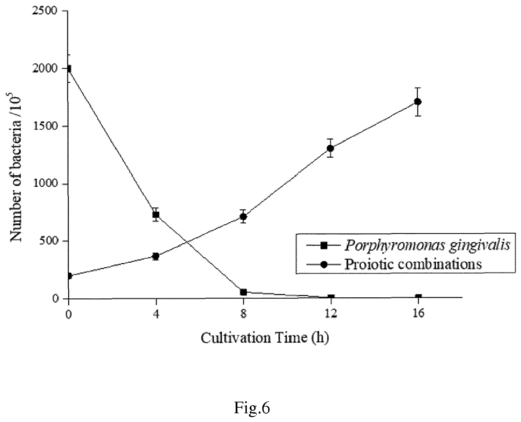

The probiotic combinations were co-cultivated with *Porphyromonas gingivalis,* and the experiment result is shown in Fig. 6;

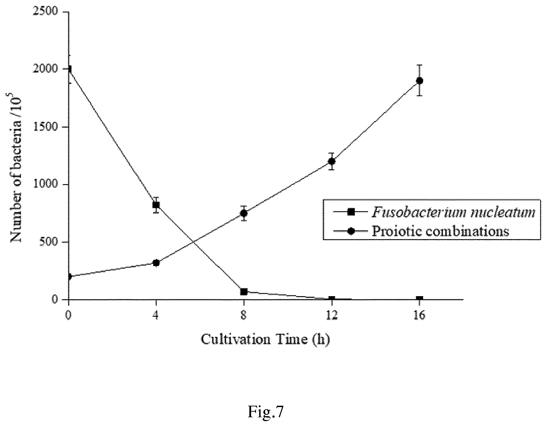

The probiotic combinations were co-cultivated with *Fusobacterium nucleatum,* and the experiment result is shown in Fig.7;

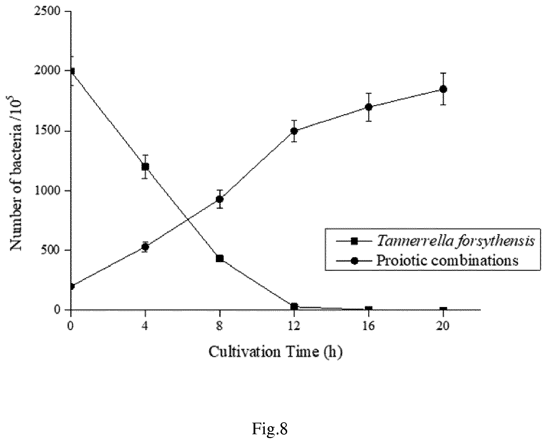

The probiotic combinations were co-cultivated with *Tannerella forsythia,* and the with experiment result shown in Fig. 8;

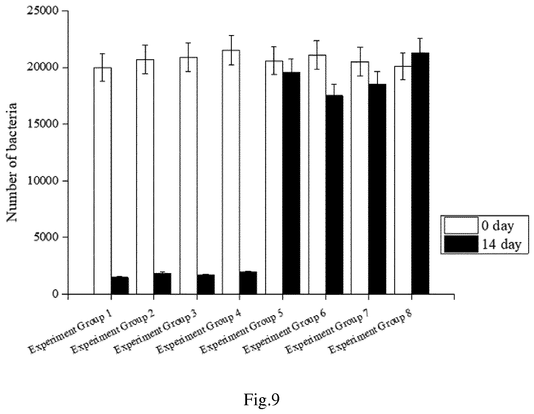

The growth conditions of bacteria in the mouths of the dogs before and after the experiment are shown in Fig. 9; and

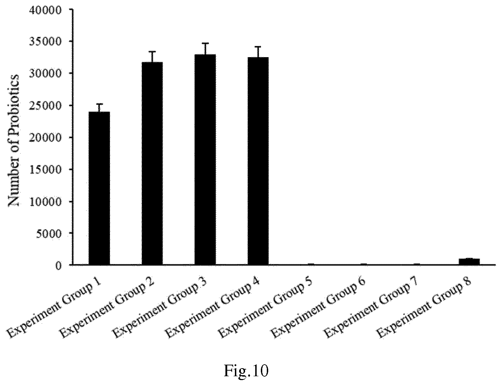

The growth conditions of the probiotics in the mouths of the dogs before and after the experiment are shown in Fig. 10.

### DETAILED DESCRIPTION OF THE EMBODIMENTS

The above and other objects, features and advantages of this disclosure will become apparent from the following detailed description taken with the accompanying drawings.

Only some embodiments of the present disclosure have been illustrated in the drawings, but it should be pointed out that many other modifications are conceivable within the scope of the following claims.

### Embodiment 1 (comparative)

The pet chew toy with oral care properties of this comparative embodiment comprises a main body probiotics, prebiotics, and adhesives.

The pet chew toy is composed of 0.1% (w/w) of probiotics, 1% (w/w) of isomaltooligosaccharides, 10% (w/w) of cellulose, 20% (w/w) of fish gelatin, 23.9% (w/w) of blood-albumen glue, 40% (w/w) of starch, and 5% (w/w) of bone powder.

Wherein, the probiotics are composed of *Bifidobacterium bifidum, Bifidobacterium breve, Lactobacillus acidophilus, Lactobacillus crispatus, Lactobacillus delbrueckii* subsp. *lactis, Bacillus coagulans, Bacillus subtilis,* and *Bacillus licheniformis.*

The bifidobacterium probiotics (including *Bifidobacterium bifidum,* and *Bifidobacterium breve)* is prepared by inoculating 5% *Bifidobacterium bifidum* and *Bifidobacterium breve* to BS liquid medium respectively and cultured at 37°C for 48 hours, and the bacteria are collected. The counts of live bacteria *Bifidobacterium bifidum* and *Bifidobacterium breve* are 1.0-5.0×10⁸ cfu/g respectively.

The lactobacillus probiotics (including *Lactobacillus acidophilus, Lactobacillus crispatus,* and *Lactobacillus delbrueckii* subsp. *lactis*) is prepared by inoculating 5% *Lactobacillus acidophilus, Lactobacillus crispatus,* and *Lactobacillus delbrueckii* subsp. *lactis* to MRS liquid medium respectively and cultured at 37°C for 48 hours, and the bacteria are collected. The counts of live bacteria *Lactobacillus acidophilus, Lactobacillus crispatus,* and *Lactobacillus delbrueckii* subsp. *lactis* are 1.0-5.0×10⁸ cfu/g respectively.

The bacillus probiotics (including *Bacillus coagulans, Bacillus subtilis,* and *Bacillus licheniformis*) is prepared by inoculating 5% *Bacillus coagulans, Bacillus subtilis,* and *Bacillus licheniformis* to LB medium and cultured at 37°C for 48 hours, and the bacteria are connected. The counts of live bacteria *Bacillus coagulans, Bacillus subtilis,* and *Bacillus licheniformis* are 1.0-5.0×10⁸ cfu/g respectively.

*Bifidobacterium bifidum, Bifidobacterium breve, Lactobacillus acidophilus, Lactobacillus crispatus, Lactobacillus delbrueckii* subsp. *lactis, Bacillus coagulans, Bacillus subtilis,* and *Bacillus licheniformis* are combined 1:1:1:1:1:1:1:1 (w/w) to obtain bacterial pellets. The pellets are mixed with freeze-dried protectants 1:1 (w/w) and freeze-dried to obtain probiotics powder.

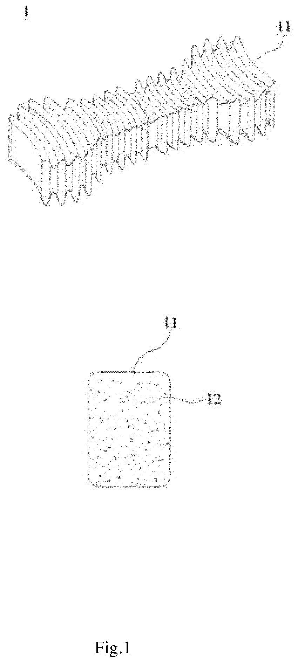

The preparation method is as follow: the above-mentioned ingredients are weighed and mixed thoroughly, and molded into pet chew toys with oral care properties. With reference to Fig.1 for the pet chew toy product of the present invention, including the isometric view (top) and cross-sectional view (bottom) of the product, wherein symbol 1 is the product, 11 is a main body, and 12 is a dental care component.

### Embodiment 2

The pet chew toy with oral care properties of this embodiment comprises a main body 11 probiotics, prebiotics, and adhesives.

The pet chew toy is composed of 0.3% (w/w) of probiotics, 8% (w/w) of fructooligosaccharides, 10% (w/w) of galactooligosaccharides, 0.5% (w/w) of bone glue, 20% (w/w) of tannin, 18.2% (w/w) of gum arabic, 37% (w/w) of starch, and 6% (w/w) of bone powder.

*Bifidobacterium adolescentis, Bifidobacterium longum, Lactobacillus gasseri, Lactobacillus helveticus, Lactobacillus johnsonii, Bacillus coagulans,* and *Bacillus subtilis* are combined 1:1:1:1:1:1:1 (w/w) to obtain bacterial pellets. The pellets are mixed with freeze-dried protectants 1:1 (w/w) and freeze-dried to obtain probiotics powder.

The counts of live bacteria are 1.0-5.0×10⁸ cfu/g respectively.

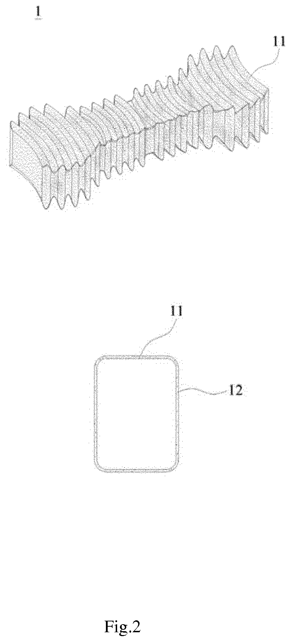

The preparation method is as follow: the starch and the bone powder are mixed thoroughly, pressed into a designated shapes as a main body; the tannin is applied to the surface of the main body, and then the premixed mixture of probiotics, prebiotics, bone glue and gum arabic are applied to the surface of the main body to obtain the pet chew toy with the oral care properties. With reference to Fig.2 for the pet chew toy product of the present invention, including the isometric view (top) and cross-sectional view (bottom) of the product, wherein symbol 1 is the product, 11 is a main body, and 12 is a dental care component.

### Embodiment 3 (comparative)

The pet chew toy with oral care properties of this comparative embodiment comprises a main body probiotics, prebiotics, and adhesives.

The pet chew toy is composed of 0.5% (w/w) of probiotics, 3% (w/w) of xylooligosaccharides, 9.5% (w/w) of sodium alginate, 20% (w/w) of casein, 25% (w/w) of shellac, 35% (w/w) of starch, and 7% (w/w) of bone powder.

*Bifidobacterium animalis, Bifidobacterium infantis, Lactobacillus paracasei, Lactobacillus bulgaricus, Lactobacillus casei, Lactobacillus fermentum, Bacillus coagulans,* and *Bacillus licheniformis* are combined 1:1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

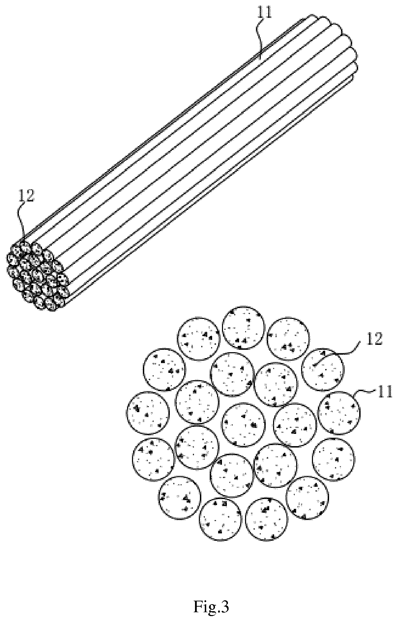

The preparation method is as follow: the above-mentioned ingredients are weighed and mixed thoroughly, and molded into pet chew toys with oral care properties. With reference to Fig.3 for the pet chew toy product of the present invention, including the isometric view (top) and cross-sectional view (bottom) of the product, wherein symbol 11 is a main body, and 12 is a dental care component. As can be seen that, prebiotics and probiotics are uniformly dispersed in the main body.

### Embodiment 4

The pet chew toy with oral care properties of this embodiment comprises a main body probiotics, prebiotics, and adhesives.

The pet chew toy is composed of 0.7% (w/w) of probiotics, 8% (w/w) of lactosucrose, 8% (w/w) of soybean oligosaccharides, 2% (w/w) of fish gelatin, 20% (w/w) of cellulose, 23.3% (w/w) of sodium alginate, 30% (w/w) of starch, and 8% (w/w) of bone powder.

*Bifidobacterium bifidum, Bifidobacterium adolescentis, Lactobacillus acidophilus, Lactobacillus gasseri, Lactobacillus paracasei, Bacillus subtilis,* and *Bacillus licheniformis* are combined 1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

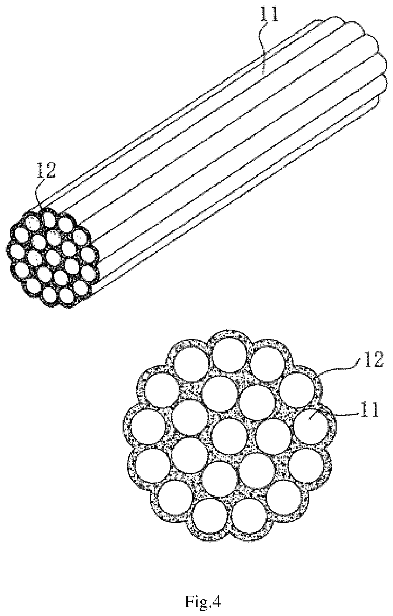

The preparation method is as follow: the starch and the bone powder are mixed thoroughly, pressed into a designated shape as a main body; the sodium alginate is applied to the surface of the main body, and then the premixed mixture of probiotics, prebiotics, fish gelatin and cellulose are applied to the surface of the main body to obtain the pet chew toy with the oral care properties. With reference to Fig.4 for the pet chew toy product of the present invention, including the isometric view (top) and cross-sectional view (bottom) of the product, wherein symbol 11 is a main body, and 12 is a dental care component. As can be seen that, prebiotics and probiotics are attached to the surface of the main body by the action of adhesives.

### Embodiment 5

The pet chew toy with oral care properties of this embodiment comprises a main body probiotics, prebiotics, and adhesives.

The pet chew toy is composed of 0.9% (w/w) of probiotics, 5% (w/w) of inulin, 2.5% (w/w) of gum arabic, 20% (w/w) of bone glue, 20.6% (w/w) of fish gelatin, 22% (w/w) of starch, 9% (w/w) of bone powder, and 20% (w/w) of rubber.

*Bifidobacterium bifidum, Bifidobacterium longum, Lactobacillus crispatus, Lactobacillus helveticus, Lactobacillus bulgaricus, Bacillus coagulans, Bacillus subtilis,* and *Bacillus licheniformis* are combined 1:1:1:1:1:1:1:1 (w/w) to obtain bacterial pellets. The pellets are mixed with freeze-dried protectants 1:1 (w/w) and freeze-dried to obtain probiotics powder.

The counts of live bacteria are 1.0-5.0×10⁸ cfu/g respectively.

Wherein, the culture method of the probiotics is the same as that of Embodiment 1.

The preparation method is as follow: the starch and the bone powder are mixed thoroughly, pressed into a designated shape with the rubber to form a main body; the fish gelatin is applied to the surface of the main body, and then the premixed mixture of probiotics, prebiotics, gum arabic and bone glue are applied to the surface of the main body to obtain the pet chew toy with the oral care properties.

### Embodiment 6 (comparative)

The pet chew toy with oral care properties of this comparative embodiment comprises a main body probiotics, prebiotics, and adhesives.

The pet chew toy is composed of 2.4% (w/w) of probiotics, 7% (w/w) of isomaltooligosaccharides, 7% (w/w) of fructooligosaccharides, 7% (w/w) of blood-albumen glue, 15% (w/w) of cellulose, 15.6% (w/w) of tannin, 32% (w/w) of starch, and 14% (w/w) of bone powder.

*Bifidobacterium bifidum, Bifidobacterium animalis, Lactobacillus delbrueckii* subsp. *bulgaricus, Lactobacillus johnsonii, Lactobacillus casei, Bacillus coagulans,* and *Bacillus subtilis* are combined 1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the above-mentioned ingredients are weighed and mixed thoroughly, and molded into pet chew toys with oral care properties.

### Embodiment 7

The pet chew toy with oral care properties of this embodiment comprises a main body probiotics, prebiotics, and adhesives.

The pet chew toy is composed of 1.7% (w/w) of probiotics, 8% (w/w) of galactooligosaccharides, 4% (w/w) of tannin, 20% (w/w) of blood-albumen glue, 20.3% (w/w) of casein, 35%(w/w) of starch, and 11% (w/w) of bone powder.

*Bifidobacterium bifidum, Bifidobacterium infantis, Lactobacillus gasseri, Lactobacillus fermentum, Lactobacillus salivarius, Bacillus coagulans,* and *Bacillus licheniformis* are combined 1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the starch and the bone powder are mixed thoroughly, pressed into a designated shape as a main body; the casein is applied to the surface of the main body, and then the premixed mixture of probiotics, prebiotics, tannin and blood-albumen glue are applied to the surface of the main body to obtain the pet chew toy with the oral care properties.

### Embodiment 8 (comparative)

The pet chew toy with oral care properties of this comparative embodiment comprises a main body probiotics, prebiotics, and adhesives.

The pet chew toy is composed of 2% (w/w) of probiotics, 5% (w/w) of xylooligosaccharides, 5% (w/w) of lactosucrose, 5% (w/w) of casein, 20% (w/w) of gum arabic, 23% (w/w) of sodium alginate, 28% (w/w) of starch, and 12% (w/w) of bone powder.

*Bifidobacterium bifidum, Bifidobacterium breve, Bifidobacterium adolescentis, Lactobacillus gasseri, Lactobacillus bulgaricus, Lactobacillus reuteri, Bacillus subtilis,* and *Bacillus licheniformis* are combined 1:1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the above-mentioned ingredients are weighed and mixed thoroughly, and molded into pet chew toys with oral care properties.

### Embodiment 9

The pet chew toy with oral care properties of this embodiment comprises a main body probiotics, prebiotics, and adhesives.

The pet chew toy is composed of 2.2% (w/w) of probiotics, 6% (w/w) of soybean oligosaccharide, 6% (w/w) of inulin, 6% of (w/w) shellac, 17% (w/w) of cellulose, 20% (w/w) of gum arabic, 30% (w/w) of starch, 13% (w/w) of bone powder.

*Bifidobacterium breve, Bifidobacterium longum, Lactobacillus helveticus, Lactobacillus casei, Lactobacillus rhamnosus, Bacillus coagulans,* and *Bacillus subtilis* are combined 1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the starch and the bone powder are mixed thoroughly, pressed into a designated shape as a main body; the gum arabic is applied to the surface of the main body, and then the premixed mixture of probiotics, prebiotics, shellac and cellulose are applied to the surface of the main body to obtain the pet chew toy with the oral care properties.

### Embodiment 10

The pet chew toy with oral care properties of this embodiment comprises a main body probiotics, prebiotics, and adhesives.

The pet chew toy is composed of 1.4% (w/w) of probiotics, 7% (w/w) of fructooligosaccharides, 3% (w/w) of cellulose, 15% (w/w) of bone glue, 20% (w/w) of shellac, 24% (w/w) of starch, 10% (w/w) of bone powder, and 20% (w/w) of woven fabrics.

*Bifidobacterium breve, Bifidobacterium animalis, Lactobacillus johnsonii, Lactobacillus fermentum, Lactobacillus plantarum, Bacillus coagulans,* and *Bacillus licheniformis* are combined 1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the starch and the bone powder are mixed thoroughly, pressed into a designated shape with the woven fabrics to form a main body; the shellac is applied to the surface of the main body, and then the premixed mixture of probiotics, prebiotics, cellulose and bone glue are applied to the surface of the main body to obtain the pet chew toy with the oral care properties.

### Embodiment 11 (comparative)

The pet chew toy with oral care properties of this comparative embodiment comprises a main body probiotics, prebiotics, and adhesives.

The pet chew toy is composed of 2.6% (w/w) of probiotics, 7% (w/w) of galactooligosaccharides, 8% (w/w) of xylooligosaccharides, 8% (w/w) of tannin, 5% (w/w) of bone glue, 10% (w/w) of blood-albumen glue, 10% (w/w) of casein, 34% (w/w) of starch, and 15% (w/w) of bone powder.

*Bifidobacterium breve, Bifidobacterium infantis, Lactobacillus acidophilus, Lactobacillus helveticus, Lactobacillus fermentum, Lactobacillus salivarius,* and *Bacillus coagulans* are combined 1:1:1:1:1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the above-mentioned ingredients are weighed and mixed thoroughly, and molded into pet chew toys with oral care properties.

### Embodiment 12

The pet chew toy with oral care properties of this embodiment comprises a main body probiotics, prebiotics, and adhesives.

The pet chew toy is composed of 3% (w/w) of probiotics, 5% (w/w) of lactosucrose, 5% (w/w) of soybean oligosaccharides, 10% (w/w) of inulin, 10% (w/w) of fish gelatin, 10% (w/w) of cellulose, 10% (w/w) of gum arabic, 17% (w/w) of sodium alginate, 15% (w/w) of starch, and 15% (w/w) of bone powder.

*Bifidobacterium adolescentis, Bifidobacterium animalis, Lactobacillus crispatus, Lactobacillus johnsonii, Lactobacillus reuteri,* and *Bacillus subtilis* are combined 1:1:1 :1:1:1 (w/w) to obtain bacterial pellets. The pellets are mixed with freeze-dried protectants 1:1 (w/w) and freeze-dried to obtain probiotics powder. The counts of live bacteria are 1.0-5.0×10⁸ cfu/g respectively.

Wherein, the culture method of the probiotics is the same as that of Embodiment 1.

The preparation method is as follow: the starch and the bone powder are mixed thoroughly, pressed into a designated shape as a main body; the sodium alginate is applied to the surface of the main body, and then the premixed mixture of probiotics, prebiotics, fish gelatin, cellulose and gum arabic are applied to the surface of the main body to obtain the pet chew toy with the oral care properties.

### Embodiment 13

The pet chew toy with oral care properties of this embodiment comprises a main body probiotics, prebiotics, and adhesives.

The pet chew toy is composed of 2.8% (w/w) of probiotics, 6% (w/w) of lactosucrose, 7% (w/w) of blood-albumen glue, 10% (w/w) of tannin, 18.2% (w/w) of sodium alginate, 27% (w/w) of starch, 9% (w/w) of bone powder, and 20% (w/w) of a commercially available pet toy.

*Bifidobacterium longum, Bifidobacterium animalis, Bifidobacterium infantis, Lactobacillus delbrueckii* subsp. *lactis, Lactobacillus bulgaricus, Lactobacillus rhamnosus,* and *Bacillus licheniformis* are combined 1:1:1:1:1:1:1 (w/w) to obtain bacterial pellets. The pellets are mixed with freeze-dried protectants 1:1 (w/w) and freeze-dried to obtain probiotics powder.

The counts of live bacteria are 1.0-5.0×10⁸ cfu/g respectively. Wherein, the culture method of the probiotics is the same as that of Embodiment 1.

The preparation method is as follow: the starch and the bone powder are mixed thoroughly, pressed into a designated shape with the commercially available pet toy to form a main body; the sodium alginate is applied to the surface of the main body, and then the premixed mixture of probiotics, prebiotics, blood-albumen glue and tannin are applied to the surface of the main body to obtain the pet chew toy with the oral care properties.

The preferred embodiments of the present invention include but not limited to the above-stated ones, which are favorable examples rather than limitations to the present invention.

To test the effect of the pet chew toys of the present invention on the recovery from a pet's oral diseases, co-cultivation of bacterial strains experiments and recovery experiments of periodontal diseases on dogs were conducted to verify the efficacy of the present invention for periodontal diseases.

### 1. Study on Antibacterial Properties of Probiotics

Dilute the cultures of the germs causing the periodontal diseases to 10⁶ cfu/mL, including *Streptococcus mutan, Porphyromonas gingivalis, Fusobacterium nucleatum,* and *Tannerella forsythia,* and apply 0.1 mL of the cultures to a beef extract peptone plate. Place an Oxford cup (diameter of 8 mm) on the plate, and add 100 µL of the bacterial cultures of the probiotic combinations of Embodiment 1. Incubate at 37°C for 24 hours and measure the diameters of bacteriostatic rings. Sterile saline is used as control group. Experiment results are listed in Table 1 below.

**Table 1. Diameter of the Bacteriostatic Rings (Unit: mm)**

| | *Streptococcus mutan* | *Porphyromonas gingivalis* | *Fusobacterium nucleatum* | *Tannerella forsythia* |
|---|---|---|---|---|
| Experiment Group | 14.3±1.1 | 19.5±0.6 | 17.3±1.7 | 16.1±1.0 |
| Control Group | | | | |

| | | | | |
|---|---|---|---|---|
| Note: - stands for no bacteriostatic effect. | | | | |

The experiment results indicated that the probiotic combinations had the effect of inhibiting *Streptococcus mutan, Porphyromonas gingivalis, Fusobacterium nucleatum,* and *Tannerella forsythia.*

### 2. Co-cultivation Experiment of Bacterial Strains

The probiotic combinations of Embodiment 1 were respectively co-cultivated with *Streptococcus mutan, Porphyromonas gingivalis, Fusobacterium nucleatum,* and *Tannerella forsythia* in liquid medium, and incubated at 37°C. Samples were taken at different cultivation times, and plate count method was applied to analyze the antibacterial effects of the probiotics.

The probiotic combinations were co-cultivated with *Streptococcus mutan,* with the experiment result shown in the Fig.5.

It can be seen from Fig.5 that, after the probiotic combinations co-cultivated with Streptococcus mutan for 36 hours, the number of Streptococcus mutan were completely suppressed. The result indicated that the probiotic combinations had the effect of inhibiting the Streptococcus mutan.

The probiotic combinations were co-cultivated with Porphyromonas gingivalis, with the experiment result shown in the Fig.6.

It can be seen from Fig.6 that, after the probiotic combinations co-cultivated with *Porphyromonas gingivalis* for 16 hours, the number of *Porphyromonas gingivalis* were completely suppressed. The result indicated that the probiotic combinations had the effect of inhibiting the *Porphyromonas gingivalis.*

The probiotic combinations were co-cultivated with *Fusobacterium nucleatum,* and the experiment result is shown in the Fig.7.

It can be seen from Fig.7 that, after the probiotic combinations co-cultivated with *Fusobacterium nucleatum* for 16 hours, the number of *Fusobacterium nucleatum* were completely suppressed. The result indicated that the probiotic combinations had the effect of inhibiting the *Fusobacterium nucleatum.*

The probiotic combinations were co-cultivated with *Tannerella forsythia,* and the with experiment result shown in the Fig.8.

It can be seen from Fig.8 that, after the probiotic combinations co-cultivated with *Tannerella forsythia* for 20 hours, the number of *Tannerella forsythia* were completely suppressed. The result indicated that the probiotic combinations had the effect of inhibiting the *Tannerella forsythia.*

### 3. Recovery Experiments of Periodontal Diseases on Dogs

Three-year old dogs suffering from periodontal diseases and fetid breath were selected as experimental subjects. Eight experiment groups were set and each group adopted three experimental subject dogs.
Experiment Group 1: the pet chew toys of Embodiment 1 were given to the experimental subject dogs daily;
Experiment Group 2: the pet chew toys of Embodiment 2 were given to the experimental subject dogs daily;
Experiment Group 3: the pet chew toys of Embodiment 5 were given to the experimental subject dogs daily;
Experiment Group 4: the pet chew toys of Embodiment 13 were given to the experimental subject dogs daily;
Experiment Group 5: the pet chew toys of Embodiment 5 excluding the ingredients of probiotics, prebiotics and adhesives were given to the experimental subject dogs daily, wherein containing starch, bone powder and rubber only;
Experiment Group 6: commercially available dog chews made of pig skins were given to the experimental subject dogs daily;
Experiment Group 7: commercially available dog chews made of rubber were given to the experimental subject dogs daily;
Experiment Group 8: commercially available dog food containing Lactobacillus were given to the experimental subject dogs daily;

The experimental objects were treated accordingly for fourteen consecutive days. 1cm×1cm sterile filter papers were used to randomly collect bacteria from periodontal tissues of the eight groups before and after the experiment respectively. The filter papers were submerged into 1.0 mL of saline solution following a series of ten-fold dilutions, and applied to culture plates. Plate count method was applied to calculate the number of colonies and the growth conditions of bacteria in the mouths of each of the dogs in the eight experiment groups. In addition, the breath smell of each dog was also evaluated before and after each experiment.

The growth conditions of bacteria in the mouths of the eight experiment groups before and after the experiment are shown in Fig.9.

According to the results (see Fig.9), after fourteen consecutive days of treatment, the dogs of Experiment Group 1, 2, 3 and 4 showed a significant decrease in the number of mouth bacteria and improvement in periodontal disease symptoms while the dogs of Experiment Groups 5, 6, and 7 showed no significant decrease in the number of mouth bacteria in the mouths. The dogs of Experiment Group 8 showed a slight increase in the number of mouth bacteria. The result indicates that the pet chew toys of the present invention have significant effects of inhibiting the growth of bacteria in dogs' mouths.

The evaluation of the breath smell of each of the eight experiment groups before and after the experiment are shown in Table 2 below.

**Table 2. Evaluation of Dogs' Breath Smell Before & After Experiment**

| Experiment time (day) | Experiment group 1 | Experiment group 2 | Experiment group 3 | Experiment group 4 |
|---|---|---|---|---|
| 0 | + | + | + | + |
| 14 | - | - | - | - |

| Experiment time (day) | Experiment group 5 | Experiment group 6 | Experiment group 7 | Experiment group 8 |
|---|---|---|---|---|
| 0 | + | + | + | + |
| 14 | + | + | + | + |

| | | | | |
|---|---|---|---|---|
| Note: + stands for fetid breath, and - stands for no fetid breath. | | | | |

According to the results, after fourteen consecutive days' treatment, the fetid breath for the dogs in Experiment Groups 1, 2, 3 and 4 disappeared while the fetid breath for the dogs in Experiment Groups 5, 6, 7, and 8 remained unchanged. The experiment result indicates that the pet chew toys of the present invention have intended effect of significantly improving the dogs' fetid breath.

### 4. Correlation of Chewing Time and Probiotics Colonization Experiment

To study the chewing time of the pet chew toys in correlation with the probiotics to adhere and colonize in a pet's mouth, three-year old dogs with healthy oral condition were selected as experimental subjects. Eight experiment groups were set and each group was comprised of three experimental subject dogs.
Experiment Group 1: the pet chew toys of Embodiment 1 were given to the experimental subject dogs for about 60 seconds;
Experiment Group 2: the pet chew toys of Embodiment 1 were given to the experimental subject dogs for about 120 seconds;
Experiment Group 3: the pet chew toys of Embodiment 1 were given to the experimental subject dogs for about 180 seconds;
Experiment Group 4: the pet chew toys of Embodiment 1 were given to the experimental subject dogs for about 240 seconds;
Experiment Group 5: the pet chew toys of Preferred Embodiment 1 excluding the ingredients of probiotics, prebiotics and adhesives were given to the experimental subject dogs for about 180 seconds, these pet chew toys contained starch and bone powder only;
Experiment Group 6: commercially available dog chews made of pig skins were given to the experimental subject dogs for about 180 seconds;
Experiment Group 7: commercially available dog chews made of rubber were given to the experimental subject dogs for about 180 seconds;
Experiment Group 8: commercially available dog food containing Lactobacillus were given to the experimental subject dogs;

The experimental objects were treated accordingly for fourteen consecutive days. 1cm×1cm sterile filter papers were used to randomly collect bacteria from periodontal tissues of the eight groups before and after the experiment respectively. The filter papers were submerged into 1.0 mL of saline solution following a series of ten-fold dilutions, and applied to culture plates. Plate count method was applied to calculate the number of colonies and the growth conditions of the probiotics in the mouths of each of the dogs in the eight experiment groups.

The growth conditions of the probiotics in the mouths of the eight experiment groups before and after the experiment are shown in Fig.10.

According to the results (see Fig.10), after fourteen consecutive days of treatment, the dogs of Experiment Group 1, 2, 3 and 4 showed a large amount of probiotics detected in the mouths of the subjected dogs, though the number of probiotics in Experiment Group 1 was not as much as Experiment Group 2, 3 and 4 due to the relatively short chewing time. The results demonstrated that a relatively short period of time is sufficient for the prebiotics and probiotics adhering to the mouth membranes by the adhesives. Pet chews of Experiment Group 5, 6 and 7 did not contain the probiotics, so no probiotic bacteria were detected and could not provide any oral care properties. The dog food used by Experiment Group 8 was regular pet food, which was consumed quickly and the chewing time was relatively short. The probiotics were not provided with adhesives for adherence and also no sufficient time to be activated, reproduce or colonize. Therefore, it is clear this type of pet food fails to help form predominant probiotic flora in a dog's mouth and only very little probiotics were detected in the mouths of subjected dogs.

## Claims

1. A method for preparing a pet chew toy with oral care properties, said pet chew toy comprising a main body, adhesives, probiotics and prebiotics, said method comprising the following steps:
measuring the ingredients of the pet chew toy, applying a part of adhesive to the surface of a main body, and then applying a premixed probiotics, prebiotics and adhesive to the surface of the main body to obtain a pet chew toy with oral care properties;
wherein the adhesive applied to the surface of the main body is different from the adhesive premixed with the probiotics and prebiotics;
wherein the main body comprises at least one of woven fabrics, rubber, plastic, starch, proteins, fibers, and bone powder and/or a commercially available pet toy;
wherein the adhesives are plant-based adhesives and/or animal-based adhesives, wherein the plant-based adhesives comprise at least one of starch, cellulose, tannin, gum arabic and sodium alginate; wherein the animal-based adhesives comprise at least one of bone glue, fish gelatin, blood-albumen glue, casein and shellac.

2. The method for preparing a pet chew toy with oral care properties according to claim 1, **characterized in that** the probiotics comprise Bifidobacterium and/or Lactobacillus and/or Bacillus.

3. The method for preparing a pet chew toy with oral care properties according to claim 1, **characterized in that** the bifidobacterium includes at least one of *Bifidobacterium bifidum, Bifidobacterium animalis, Bifidobacterium breve, Bifidobacterium infantis, Bifidobacterium adolescentis* and *Bifidobacterium longum;* wherein the lactobacillus includes at least one of *Lactobacillus acidophilus, Lactobacillus casei, Lactobacillus crispatus, Lactobacillus bulgaricus, Lactobacillus delbrueckii* subsp. *lactis, Lactobacillus fermentum, Lactobacillus gasseri, Lactobacillus helveticus, Lactobacillus johnsonii, Lactobacillus paracasei, Lactobacillus plantarum, Lactobacillus reuteri, Lactobacillus rhamnosus,* and *Lactobacillus salivarius*; wherein the bacillus includes at least one of Bacillus coagulans, Bacillus subtilis and Bacillus licheniformis.

4. The method for preparing a pet chew toy with oral care properties according to claim 1, **characterized in that** prebiotics comprise functional oligosaccharides, wherein the functional oligosaccharides comprise at least one of isomaltooligosaccharides, fructooligosaccharides, galactooligosaccharides, xylooligosaccharides, lactosucrose, soybean oligosaccharides and inulin.

5. The method for preparing a pet chew toy with oral care properties according to claim 1, **characterized in that**: measuring the ingredients of the pet chew toy, mixing the ingredients except for the probiotics, the prebiotics and the adhesive, pressing/molding into a designated shape as a main body, applying a part of adhesive to the surface of the main body, and then applying a premixed probiotics, prebiotics and adhesive to the surface of the main body to obtain a pet chew toy with oral care properties.

## Patentansprüche

1. Verfahren zum Herstellen eines Kauspielzeugs für Haustiere mit oralen Pflegeeigenschaften, wobei das Kauspielzeug für Haustiere einen Hauptkörper, Klebstoffe, Probiotika und Präbiotika umfasst, wobei das Verfahren die folgenden Schritte umfasst:
Messen der Inhaltsstoffe des Kauspielzeugs für Haustiere,
Auftragen eines Teils des Klebstoffs auf die Oberfläche eines Hauptkörpers und danach Auftragen von vorgemischten Probiotika, Präbiotika und Klebstoff auf die Oberfläche des Hauptkörpers, um ein Kauspielzeug für Haustiere mit oralen Pflegeeigenschaften zu erhalten;
wobei sich der auf die Oberfläche des Hauptkörpers aufgetragene Klebstoff von dem Klebstoff unterscheidet, der mit den Probiotika und Präbiotika vorgemischt wird;
wobei der Hauptkörper zumindest eines von gewobenem Gewebe, Kautschuk, Kunststoff, Stärke, Proteinen, Fasern und Knochenpulver und/oder ein im Handel erhältliches Spielzeug für Haustiere umfasst;
wobei die Klebstoffe Klebstoffe auf pflanzlicher Basis und/oder Klebstoffe auf tierischer Basis sind, wobei die Klebstoffe auf pflanzlicher Basis zumindest eines von Stärke, Cellulose, Tannin, Gummi arabicum und Natriumalginat umfassen; wobei die Klebstoffe auf tierischer Basis zumindest eines von Knochenkleber, Fischgelatine, Blutalbuminkleber, Kasein und Schellack umfassen.

2. Verfahren zum Herstellen eines Kauspielzeugs für Haustiere mit oralen Pflegeeigenschaften nach Anspruch 1, **dadurch gekennzeichnet, dass** die Probiotika Bifidobacterium und/oder Lactobacillus und/oder Bacillus umfassen.

3. Verfahren zum Herstellen eines Kauspielzeugs für Haustiere mit oralen Pflegeeigenschaften nach Anspruch 1, **dadurch gekennzeichnet, dass** das Bifidobacterium zumindest eines von *Bifidobacterium bifidum, Bifidobacterium animalis, Bifidobacterium breve, Bifidobacterium infantis, Bifidobacterium adolescentis* und *Bifidobacterium longum* beinhaltet; wobei das Lactobacillus zumindest eines von *Lactobacillus acidophilus, Lactobacillus casei, Lactobacillus crispatus, Lactobacillus bulgaricus, Lactobacillus delbrueckii subsp. lactis, Lactobacillus fermentum, Lactobacillus gasseri, Lactobacillus helveticus, Lactobacillus johnsonii, Lactobacillus paracasei, Lactobacillus plantarum, Lactobacillus reuteri, Lactobacillus rhamnosus* und *Lactobacillus salivarius* beinhaltet; wobei das Bacillus zumindest eines von *Bacillus coagulans, Bacillus subtilis* und *Bacillus licheniformis* beinhaltet.

4. Verfahren zum Herstellen eines Kauspielzeugs für Haustiere mit oralen Pflegeeigenschaften nach Anspruch 1, **dadurch gekennzeichnet, dass** Präbiotika funktionelle Oligosaccharide umfassen, wobei die funktionellen Oligosaccharide zumindest eines von Isomaltooligosacchariden, Fructooligosacchariden, Galactooligosacchariden, Xylooligosacchariden, Lactosaccharose, Sojabohnenoligosacchariden und Inulin umfassen.

5. Verfahren zum Herstellen eines Kauspielzeugs für Haustiere mit oralen Pflegeeigenschaften nach Anspruch 1, **gekennzeichnet durch**: Messen der Inhaltsstoffe des Kauspielzeugs für Haustiere, Mischen der Inhaltsstoffe mit Ausnahme der Probiotika, der Präbiotika und des Klebstoffs, Pressen/Formen in eine vorgesehene Form als Hauptkörper, Auftragen eines Teils des Klebstoffs auf die Oberfläche des Hauptkörpers und danach Auftragen von vorgemischten Probiotika, Präbiotika und Klebstoff auf die Oberfläche des Hauptkörpers, um ein Kauspielzeug für Haustiere mit oralen Pflegeeigenschaften zu erhalten.

## Revendications

1. Procédé de préparation d'un jouet à mâcher pour animaux de compagnie ayant des propriétés d'hygiène buccale, ledit jouet à mâcher pour animaux de compagnie comprenant un corps principal, des adhésifs, des probiotiques et des prébiotiques, ledit procédé comprenant les étapes suivantes consistant à :
mesurer les ingrédients du jouet à mâcher pour animaux de compagnie,
appliquer une partie d'un adhésif sur la surface d'un corps principal, puis appliquer des probiotiques, des prébiotiques et un adhésif pré-mélangés sur la surface du corps principal afin d'obtenir un jouet à mâcher pour animaux de compagnie ayant des propriétés d'hygiène buccale ;
dans lequel l'adhésif appliqué sur la surface du corps principal est différent de l'adhésif pré-mélangé avec les probiotiques et les prébiotiques ;
dans lequel le corps principal comprend au moins un élément parmi des tissus tissés, du caoutchouc, du plastique, de l'amidon, des protéines, des fibres, et de la poudre d'os et/ou un jouet pour animaux de compagnie disponible dans le commerce ;
dans lequel les adhésifs sont des adhésifs d'origine végétale et/ou des adhésifs d'origine animale, où les adhésifs d'origine végétale comprennent au moins un élément parmi l'amidon, la cellulose, le tanin, la gomme arabique et l'alginate de sodium ; où les adhésifs d'origine animale comprennent au moins un élément parmi la colle d'os, la gélatine de poisson, la colle d'albumine de sang, la caséine et la gomme-laque.

2. Procédé de préparation d'un jouet à mâcher pour animaux de compagnie ayant des propriétés d'hygiène buccale selon la revendication 1, **caractérisé en ce que** les probiotiques comprennent Bifidobacterium et/ou Lactobacillus et/ou Bacillus.

3. Procédé de préparation d'un jouet à mâcher pour animaux de compagnie ayant des propriétés d'hygiène buccale selon la revendication 1, **caractérisé en ce que** la bifidobactérie comprend au moins l'une de *Bifidobacterium bifidum, Bifidobacterium animalis, Bifidobacterium breve, Bifidobacterium infantis, Bifidobacterium adolescentis* et *Bifidobacterium iongum* ; dans lequel le lactobacillus comprend au moins l'un de *Lactobacillus acidophilus, Lactobacillus casei, Lactobacillus crispatus, Lactobacillus bulgaricus, Lactobacillus delbrueckii* sous-espèce *lactis, Lactobacillus fermentum, Lactobacillus gasseri, Lactobacillus helveticus, Lactobacillus johnsonii, Lactobacillus paracasei, Lactobacillus plantarum, Lactobacillus reuteri, Lactobacillus rhamnosus,* et *Lactobacillus salivarius* ; où le bacillus comprend au moins l'un de *Bacillus coagulans, Bacillus subtilis* et *Bacillus licheniformis.*

4. Procédé de préparation d'un jouet à mâcher pour animaux de compagnie ayant des propriétés d'hygiène buccale selon la revendication 1, **caractérisé en ce que** les prébiotiques comprennent des oligosaccharides fonctionnels, où les oligosaccharides fonctionnels comprennent au moins un élément parmi des isomalto-oligosaccharides, des fructo-oligosaccharides, des galacto-oligosaccharides, des xylo-oligosaccharides, du lacto-saccharose, des oligosaccharides de soja et l'inuline.

5. Procédé de préparation d'un jouet à mâcher pour animaux de compagnie ayant des propriétés d'hygiène buccale selon la revendication 1, **caractérisé en ce que** : la mesure des ingrédients du jouer à mâcher pour animaux de compagnie, le mélange des ingrédients à l'exception des probiotiques, des prébiotiques et de l'adhésif, la pression/le moulage en une forme désignée en tant que corps principal, l'application d'une partie d'un adhésif sur la surface du corps principal, puis l'application de probiotiques, de prébiotiques et d'un adhésif pré-mélangés sur la surface du corps principal permet d'obtenir un jouet à mâcher pour animaux de compagnie ayant des propriétés d'hygiène buccale.
